# EUROPEAN PATENT SPECIFICATION

(11) **EP 2 462 084 B1**
(45) Date of publication and mention of the grant of the patent: **11.05.2016**
(21) Application number: 10747245.8
(22) Date of filing: 06.08.2010
(51) Int. Cl.: C05F 5/00, C09K 17/14, C10L 1/02

(54) **A METHOD OF REDUCING NITRATE LEACHING FROM SOIL**
VERFAHREN ZUR REDUZIERUNG DER NITRATAUSWASCHUNG AUS BODEN
UN PROCÉDÉ À RÉDUIRE LE LESSIVAGE DES NITRATES DU SOL

(30) Priority: 06.08.2009 GB 0913760
(43) Date of publication of application: 13.06.2012
(73) Proprietor: Rothamsted Research Limited, Hertfordshire AL5 2JQ (GB)
(72) Inventor: REDMILE-GORDON, Marc, Harpenden Hertfordshire AL5 2JQ (GB); BROOKES, Philip, Harpenden HertfordshireAL5 2JQ (GB)
(74) Representative: Sweetinburgh, Mark Roger
(86) International application number: PCT/GB2010/001497
(87) International publication number: WO 2011/015833

(56) References cited:
- WO-A1-2008/138114
- DE-A1- 19 830 887
- FR-A1- 2 671 074
- US-B1- 6 300 282

## Description

This invention relates to uses of waste products obtained when biodiesel is generated for reducing nitrate leaching from soil.

Nitrate-nitrogen (N) leaching losses from agriculture in UK are estimated to be up to 50 kg nitrogen per hectare per year. The true ecological cost of both inorganic and organic nitrogen fertilizer however has been estimated to be far more significant. This is largely distributed between the ecological effects of eutrophication, direct contributions to climate change (N₂O losses), and indirect contributions to climate change (manufacture and transport emissions).

All living organisms, including plants, need nitrogen to live and to grow. In autumn, nitrate (a form of nitrogen) is produced as the dry soils of summer become moister (i.e. 'wet up'). By this time, the plants (usually cereals) have been harvested. This means the nitrate (approximately 30 - 50 kg N ha⁻¹), which is very soluble, moves down through the soil to surface and ground waters. This causes many problems including water enriched with nutrients (eutrophication) and damage to aquatic ecosystems. It also represents a considerable financial cost to the farmer in terms of the additional fertiliser that is required to compensate for the loss of nitrogen.

The recent popularity of using crops for biofuels has further increased the demand on agricultural land and is leading to further conversion of dwindling natural habitat. Arguably the most pragmatic criticism of biofuel production from oil crops is the inefficiency inherent in the process. It has been calculated that in some situations more energy is required to make the fuel than is actually released on combustion. Indeed, nearly all biofuel crops require nitrogen fertilizer. This nitrogen comes almost entirely comes from an industrial process, known as the Haber-Bosch process, which requires vast amounts of electricity to directly combine atmospheric nitrogen with hydrogen. In addition, disposal of waste product from the biodiesel industry is expensive and problematic.

Practical solutions which can increase the efficiency of either of these two challenges to agriculture and drains on the world's energy budget are needed.

Currently there is no simple method to prevent nitrate leaching from soil to water in the short to medium term.

Autumn sown cover crops may decrease nitrate leaching in winter, especially on sandy soils. However, they cannot be used in conjunction with autumn sown crops and they need to be incorporated into the soil in spring to make way for spring sown crops.

Rashid and Voroney (J. Environ. Qual. (2005) 34:963-969) describes the application of oily food waste to soil. However, applying oily waste to land is not desirable. Furthermore, the oily food waste is not soluble in water and therefore does not disperse effectively though the soil.

DE 198 30 887 discloses the use of a blend of alkyl-glycoside surfactants with glycerol as a carbon source to decrease nitrate leaching from soil. This document teaches that both the surfactant and carbon source are required.

Thus, there is a requirement for an improved approach to decrease nitrate leaching, while also permitting sowing of more profitable autumn-sown crops and also improved methods for disposing of the waste products obtained when biodiesel is generated.

The first aspect of the invention provides the use of a biodiesel co-product (BCP) for decreasing nitrate leaching from soil, wherein the biodiesel co-product comprises between 40% and 95% glycerol and is the co-product formed when the alcohol reacts with the fatty acids of the triglycerides to form the alkyl ester and the biodiesel co-product.

BCP is any waste product or by-product that is obtained when biodiesel is produced by transesterification of renewable lipids. Thus, BCP is also known as biodiesel waste product (BWP) and biodiesel by-product (BBP). Co-product, by-product and waste product mean any product obtained by transesterification of renewable lipids except the biodiesel that is separated from the product of the transesterification process to be used as a fuel. BCP is largely a non-ester product.

Biodiesel is a fuel comprising C8 to C25 chain mono-alkyl esters, such as methyl ester, propyl ester and ethyl ester for use in compression ignition (diesel) engines. Biodiesel is produced by transesterification of renewable lipids including oils and fats, such as animal oil and plant oil including seed oil, nut oil and vegetable oil, for example, rapeseed oil and soybean oil. The transesterification process can occur without catalysation. In one embodiment of the invention, the transesterification process is catalysed by a base, such as a strong alkaline catalyst including potassium or sodium hydroxide or an acid catalyst, such as sulphuric acid.

When the transesterification process is not catalysed, the reaction is carried out under a pressure (typically between 10 and 20 MPa).

The renewable lipid can be filtered prior to use to remove any non-oil material such as dirt or charred food. In addition, water can be removed from the renewable lipid before use. This can be achieved by heating the lipid or adding a drying agent, such as anhydrous magnesium sulphate.

The transesterification process is the reaction of a triglyceride that is present in the renewable lipid with an alcohol, such as ethanol or methanol, to form esters and glycerol. Triglycerides are esters of free fatty acids with the trihydric alcohol, glycerol. The alcohol reacts with the fatty acids of the triglycerides to form the alkyl ester i.e. biodiesel and BCP. BCP may contain quantities of alcohol used in excess to produce the biodiesel. Thus, BCP is obtainable by transesterification of a triglyceride with an alcohol. It will, therefore, be appreciated that reference herein to BCP means the biodiesel co-product formed when the alcohol reacts with the fatty acids of the triglycerides to form the alkyl ester and the biodiesel co-product.

The catalyst is typically sodium hydroxide (caustic soda) or potassium hydroxide (potash), which is dissolved in the alcohol. The alcohol/catalyst mix is then added to a closed container, such as a reaction vessel, that contains renewable lipids. The reaction mix is kept between 50°C and 300°C to speed up the reaction, with 75°C being the upper limit of un-pressurised vessels. The recommended reaction time varies from a few seconds to 8 hours depending on temperature and pressure.

Once the reaction is complete, two phases exist: biodiesel and BCP. The BCP phase is denser than the biodiesel phase and therefore the two phases can be gravity separated, with BCP simply drawn off the bottom of the settling vessel. A centrifuge can be used to separate the two materials at a faster rate.

Subsequently, residual BCP can be removed from the biodiesel phase by washing the biodiesel phase with water. Thus, BCP in accordance with the invention includes biodiesel wash water. Wash water is the same as wastewater.

Residual BCP can be removed from the biodiesel phase by static washing, mist washing and bubble washing, or sorption onto an ion exchange resin (followed by removal). Static washing involves placing biodiesel and water in a tank without mixing. BCP moves from the biodiesel phase to the water over a period of time, for example, 2 hours or over, between 2 hours and 48 hours and 4 hours or over. Mist washing involved spraying water over the top of the diesel and letting the water settle down through the biodiesel collecting BCP. Bubble washing involves adding a layer of water beneath the biodiesel and forming air bubbles in the water. The water is dragged up into the biodiesel in a small layer around the air bubble, which falls back down through the biodiesel, collecting BCP, when the bubble bursts at the top of the tank

Excess alcohol may be reclaimed from the BCP before the BCP is applied to soil, for example, by distillation and this alcohol can later be used for further biodiesel production.

The BCP is water soluble and comprises between 40% and 95% glycerol. In one embodiment, BCP comprises between 40%-60%, 50%-90%, 50%-80%, 50%-70%, 60%-90%, 60%-70% and 70%-80% glycerol.

BCP can also be defined as glycerol that comprises 0.01wt% to 50wt% impurities including 0.01wt% to 45wt%, 0.05wt% to 45wt% and 1wt% to 45wt%.

BCP can additionally comprise potassium or sodium salts of the organic acid from the triglycerides i.e. soap, alcohol and/or biodiesel. Quantity varies between 1 and 20% depending on the free fatty acid (FFA) content of the feedstock lipids, degree of water contamination, and the catalyst used.

The non-water component of BCP comprises from between 40% and 80% carbon. In one embodiment of the invention, the non-water component of BCP comprises between 20% and 70% carbon including 30% to 60%, 30% to 55%, 40% to 55%, 20% to 60%, 30% to 70%, 40% to 70% and 50% to 80% carbon.

BCP including water can comprise up to 80% carbon. In one embodiment, BCP including water comprises between 5% and 80%, 10% and 80%, 10% and 70%, 20% and 70% and 20% and 60% carbon.

The application of BCP to soil can correspond to the addition of 50, 100, 150, 200, 300, 400, 500 or more mg C kg⁻¹ soil.

In one embodiment of the invention, the pH of the BCP is reduced prior to application to the soil. The pH can be reduced to between pH6.5 and pH10, pH 7 and pH 10, pH7 and pH9, pH7 and pH8 or reduced to approximately pH7. Phosphoric acid, including orthophosphoric acid, polyphosphoric acid and metaphosphoric acid, such as trimetaphosphoric acid, can be used to reduce the pH. The pH of the BCP can be neutralised.

BCP can be diluted before application to the soil, for example, by water. In addition, BCP can be combined with wastewaters from other sources before application to the soil, for example, olive oil mill wastewater.

The BCP can be applied to soil at any time of the year. In one embodiment, BCP is applied to soil in the first or second month after crops are harvested. In regions that experience seasonal fluctuations in climate, BCP can be applied to the soil when the climate is turning cooler following the warmer period of the year i.e. in autumn.

Autumn means approximately September, October and November in the northern hemisphere. In the southern hemisphere, autumn means approximately March, April and May. In all regions including regions that do not have seasons, such as territories near the equator, BCP can equally be applied to the soil after (i.e. one, two or three months after) crops are harvested, at any time of the year.

The BCP can be applied to any type of soil, such as sandy soil, silty soil, clay soil and loamy soil. In addition, the BCP can be applied to soil that is used to grow crops i.e. arable or agricultural soil, garden soil and forest soil, for example.

The BCP can also be applied to soil that is not used to grow crops at the time of application of the BCP or at any time. For example, in the northern hemisphere, the BCP can be applied in the autumn or the beginning of the winter and will prevent nitrate leaching, even in the absence of crops.

The addition of BCP decreases the rate of nitrate leaching in the soil to which it is applied. This means that the rate at which nitrate is lost from soil is reduced. The nitrate can be lost in ground and surface waters. The addition of BCP means that the rate at which nitrate is lost/leached from the soil is lower than the rate at which nitrate is lost from the soil before BCP is applied. Thus, the application of BCP immobilises the nitrate in the soil.

The rate of nitrate leaching can be decreased by 60%, 70%, 80%, 90%, 95% or over or by 100%. Thus, nitrate immobilisation can be increased by 60%, 70%, 80%, 90%, 95% or over or by 100% through the addition of BCP.

Reducing nitrate leaching results in increased nitrogen soil biomass. It can also mean the carbon soil biomass level is increased. That is the nitrogen and/or carbon soil biomass can be higher relative to the level prior to application of the BCP. The nitrogen and/or carbon content of the soil can increase by 2, 3, 4, 5, 6, 7, 8, 9, 10, 11, 12, 13, 14 or 15 fold relative to the level prior to application of the BCP.

By applying BCP prior to sowing with crops, such as winter crops, an appropriate quantity of easily metabolisable carbon is introduced into soil that already contains large amounts of nitrate. BCP stimulates the soil micro-organisms (i.e. the soil microbial biomass) into growth as the micro-organisms exploit the BCP as a substrate. In order to metabolise the nitrogen deficient BCP, the biomass requires large quantities of nitrogen so that it can use the very nitrogen deficient BCP and this nitrogen is obtained directly from the soil nitrate-nitrogen pool. It is this nitrate pool that would otherwise leach into the surface and groundwater with adverse environmental consequences. Instead, this nitrogen is transformed into new living microbial cells and, in this form, it does not leach. In spring, the new microbial cells become active but are now substrate-limited having exhausted the energy in the BCP. The new population then largely dies of starvation and the nitrogen in these microbial cells is mineralised to nitrate. It is at this time that the autumn sown crops start growing rapidly and have a high demand for nitrate. The crops then start utilising the nitrate that is being released into the soil from the dying cells. At this time, there is no longer a risk of leaching. Thus, the autumn nitrate pool is not only prevented from leaching but can also be fully utilised by the following crop. This offers both better environmental protection and a direct financial saving to the farmer, who needs to apply less nitrogen fertilizer.

Thus, the inventors have discovered that the efficiencies of nitrogen cycling and energy budgets are both improved through treating the soil with BCP and thereby utilising the native soil microbial community to immobilise soil nitrate, which would be otherwise lost to surface and ground waters by leaching.

The present invention provides a cheap, readily available, soluble material that can be applied to soil to immobilise nitrate, permitting it to be released later, at a time when it can be used by the next crop. The water soluble nature of the BCP means it will disperse easily through the layer of soil that is ploughed i.e. the 'plough layer', where the nitrate is located.

The invention provides the advantages of decreasing the loss of nitrate by leaching from soil to water during autumn/winter, decreasing the cost of applying annual fertilizer nitrogen to crops, decreasing the contamination of surface and ground waters by nitrate, so increasing the availability of potable water and decreasing production costs, decreasing the present financial and environmental costs of other methods of waste disposal, e.g. incineration and landfill, increasing soil organic matter, so improving soil structure, thereby decreasing tillage costs and decreasing leaching losses and increasing carbon sequestration, so decreasing the carbon dioxide output. The BCP is generally applied without an additional nitrogen source.

The second aspect of the invention provides a method of decreasing (or reducing) nitrate leaching in a soil comprising applying BCP to a soil, wherein the biodiesel co-product comprises between 40% and 95% glycerol and is the co-product formed when the alcohol reacts with the fatty acids of the triglycerides to form the alkyl ester and the biodiesel co-product. Thus, the rate of nitrate leaching after the BCP is applied is lower than the rate of nitrate leaching before BCP is applied. In one embodiment, the method of the second aspect of the invention further comprises increasing the carbon content of the soil. Thus, the soil carbon biomass can be increased.

The third aspect of the invention provides a method of disposing of waste from biodiesel production comprising applying BCP to a soil, wherein the biodiesel co-product decreases nitrate leaching from the soil, wherein the biodiesel co-product comprises between 40% and 95% glycerol and is the co-product formed when the alcohol reacts with the fatty acids of the triglycerides to form the alkyl ester and the biodiesel co-product.

The fourth aspect of the invention provides a method of improving soil quality comprising applying BCP to a soil, wherein the biodiesel co-product decreases nitrate leaching from the soil, wherein the biodiesel co-product comprises between 40% and 95% glycerol and is the co-product formed when the alcohol reacts with the fatty acids of the triglycerides to form the alkyl ester and the biodiesel co-product.

In one embodiment, the method further comprises increasing the carbon and/or nitrogen content of the soil. Thus, the soil carbon and/or nitrogen biomass can be increased.

By way of illustration and summary, the following scheme sets out a typical process in which BCP can be utilised to decrease nitrate leaching from soil:
BCP, obtained as a by-product when biodiesel is produced by base-catalysed transesterification, is separated from the biodiesel. The catalyst may be dissolved in methanol, in which case, after the reaction, some or all of the methanol is reclaimed from the BCP. The biodiesel is then washed with water to remove traces of BCP and the wash-water, which is also BCP, is stored in an open container to allow some of the methanol to evaporate. The BCP (both the BCP initially separated from the biodiesel and the BCP wash-water) can be adjusted to pH 7. The BCP initially separated from the biodiesel can be combined with the BCP wash-water, although equally, both sources of BCP may be utilised separately, depending on processing setup and suitability at the location. The aqueous BCP is then applied to agricultural soil in the autumn and autumn sown crops are sown in the soil.

Unless otherwise defined, all technical and scientific terms used herein have the meaning commonly understood by a person skilled in the art in the field of the present invention.

Throughout the specification, unless the context demands otherwise, the terms "comprise" or "include", variations such as "comprises" or "comprising", "includes" or "including" will be understood to imply the inclusion of stated integer or group of integers, but not the exclusion of any other integer or group of integers. It envisaged that where the term "comprising" is used, it is also possible to use the term "consisting of".

Preferred features of the second and subsequent aspects of the invention are as for the first aspect *mutatis mutandis.*

The present invention is described with reference to the following figures and tables in which:
**Figure 1** illustrates CO₂ evolved from unamended soils and soil amended with 0, 15, 500 and 1500 µg C g⁻¹ soil as BCP (response increasing with increasing rate of addition);

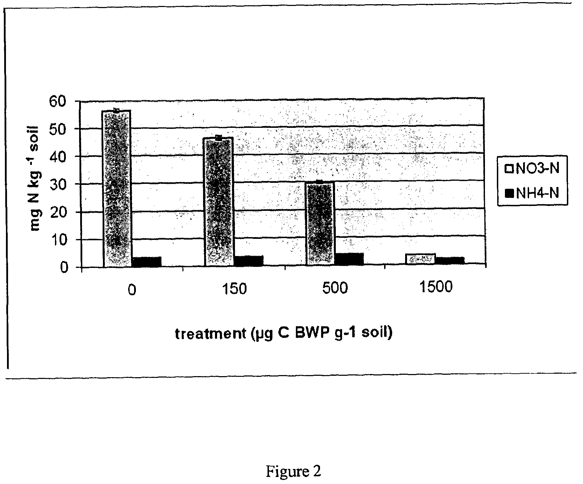

**Figure 2** illustrates K₂SO₄ extractable ammonium and nitrate-N after BCP addition;
**Figure 3a** illustrates the total organic carbon content of soil samples treated with BCP;
**Figure 3b** illustrates the total nitrogen content of the soil samples treated with BCP;
**Figure 3c** illustrates the relationship between the nitrogen biomass and the carbon biomass in soils treated with BCP;
**Figure 4a** illustrates changes in availability of total mineral forms ofN in incubated soil from Highfield arable experiment;
**Figure 4b** illustrates the nitrogen dynamics between soil and biomass (soil + BCP);
**Figure 5a** illustrates cumulative nitrate and ammonium N losses from November 2009 to March 2010;
**Figure 5b** illustrates total nitrate and ammonium N losses from November 2009 to March 2010 and
**Figure 6** illustrates increasing rates of nitrogen mineralisation of moist soil at 25°C.

The invention will now be further described by way of reference to the following examples, which are provided for the purposes of illustration only and are not to be construed as limiting to the invention.

### EXAMPLES

Nitrogen (N) and carbon (C) dynamics of soil samples amended with different quantities of biodiesel waste product were studied.

Soil was sampled in November 2007 and stored at 4 °C until use.

### Example 1 - Soil carbon mineralisation.

### Materials and Methods

Soil was prepared by sieving to < 2 mm and adjusting to 40% water holding capacity. Moist soil samples, equivalent to 100g oven-dry weight were gently packed into glass columns connected to an ADC respirometer with a gas flow rate of 1 ml min⁻¹. The BCP was applied to the soil column after packing using stainless steel needles at rates equivalent to 0, 150, 500 and 1500 µg C g⁻¹ soil. Each treatment was replicated three times.

### Results and Discussion

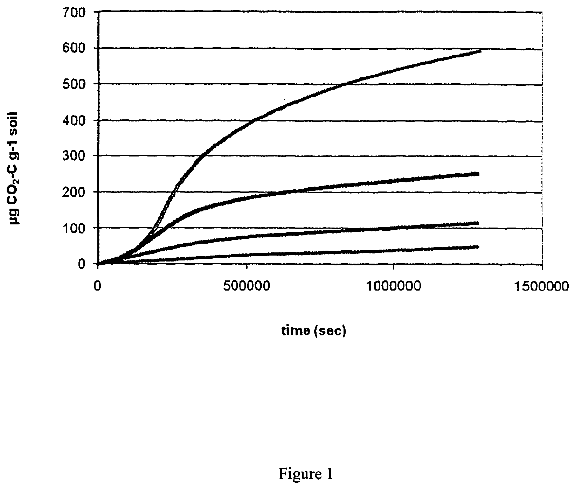

Carbon dioxide levels in soils without and with three addition rates of BCP (150, 500 and 1500 mg C g⁻¹ soil) were measured. Soil carbon mineralisation, measured as CO₂-C evolution, increased significantly and proportionally to BCP addition at all rates (Fig. 1). At 1.3 M secs (15 days), approximately 35% of the carbon added as BCP substrate was mineralised to CO₂. Also at this time, the rates of CO₂ evolved at the two lowest BCP addition rates were approximately equal to the control. The remaining 65% of this carbon can therefore be considered to be distributed between several 'pools', i.e.: unchanged recalcitrant carbon, temporarily inaccessible labile carbon, carbon assimilated by the microbial biomass, metabolite carbon: both volatile and non-volatile (such as methane and humic acids). The sum of the 'non-volatile recalcitrant metabolite' and 'unchanged recalcitrant carbon' pools reflect the sequestered carbon fraction.

### Example 2 - Changes in extractable total inorganic nitrogen following addition of BCP.

### Materials and Methods

The soil used in this experiment was from a Hoosfield arable plot at Rothamsted Research. The soils were extracted with 0.5 M K₂SO₄ on an end to end shaker for 30 min and then stored frozen until analysis. The extracts were analysed for total inorganic N, specifically: nitrite, nitrate and ammonium, by automated colorimetric analysis using a Scalar Continuous Flow autoanalyser.

### Results and Discussion.

This soil initially contained a large concentration of K₂SO₄ extractable nitrate. The addition of 150 mg C kg⁻¹ soil immobilised 10 26 mg N kg⁻¹ soil. Five hundred mg C g⁻¹ soil immobilised 26 mg N kg⁻¹ soil nitrogen, and 1500 mg C g⁻¹ soil carbon immobilised 53 mg N kg⁻¹ soil (giving ratios of carbon amendment to nitrogen immobilisation of 15:1, 19:1 and 28:1 respectively). Inorganic N concentrations (especially nitrate) were significantly decreased in the soil tested at all rates of BCP tested with the largest decrease at the highest rate of addition.

### Example 3 - Changes in microbial biomass C and N following BCP addition.

### Materials and Methods

Total soil microbial biomass C and N (biomass C and N) were measured by Fumigation Extraction. Briefly, most soil was fumigated with chloroform for 24 hours, the fumigant removed and the fumigated soil extracted with for 30 mins with 0.5 M K₂SO₄. Non-fumigated soil was extracted at the time fumigation commenced. The soil extracts were then filtered (Whatman No. 42) and the extracts stored frozen at -15°C until analysis. Biomass C was analysed by automated thermal combustion analysis and calculated according to Vance et al. (1987) Soil Biol. Biochem. 19. 697-702. Biomass N was measured by persulphate digestion and calculated according to Jenkinson (1988) Adv. in N Cycling in Agric Ecosystems. 368 - 386).

### Results and Discussion

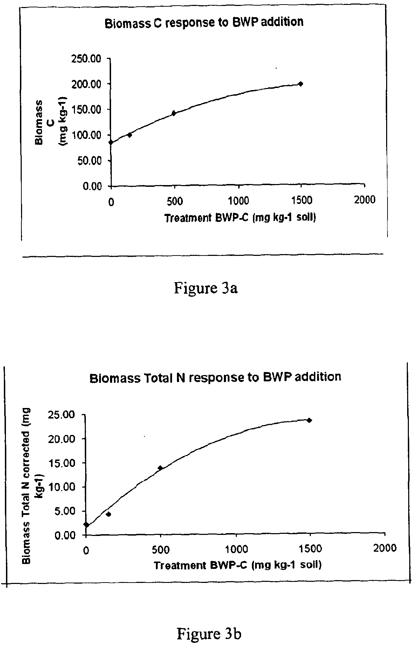

Biomass C and N increased in direct proportion to the rates of addition of BCP (Figs 3a-b). The increases were directly caused by the synthesis of new microbial cells which were utilising the C supplied in the BCP as substrate. At the maximum addition rate of, biomass C had roughly doubled and biomass N had increased nearly ten-fold. The virtually complete loss of nitrate-N at this addition rate of BCP is strong evidence that the increase in biomass N came directly from the soil nitrate pool and that this N was utilised by the biomass.

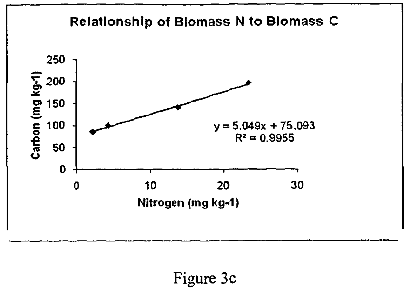

The biomass C/N ratio did not change with increasing addition rate of BCP (Fig. 3c) in line with previous studies (e.g. Jenkinson et al. loc. cit.). Extrapolating this to field conditions, 1500 µg C g⁻¹ soil as BCP equates to about 5 tonnes BCP per hectare. At this rate of BCP addition, about 50 mg nitrate N were immobilised. This equates to about 200 kg nitrate N ha⁻¹ being immobilised. This is roughly four times the size of the autumn N pool which would be otherwise leached. Thus the field rates of addition of BCP required to minimise nitrate N leaching losses in autumn are modest i.e. around 1 to 2 tonnes per hectare.

### Example 4

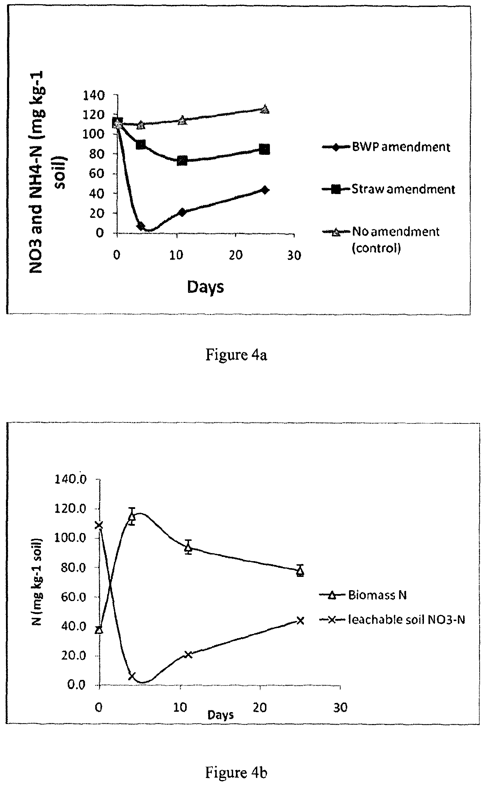

Further work in the summer of 2009 confirmed the success of BCP's capacity for immobilization of N on a different soil (Highfield Arable plot at Rothamsted). Furthermore, this N was subsequently mineralized and thus would become available to the crop (Fig. 4a).

The mechanism of storage was also identified: the microbial biomass was storing the N and releasing it again as time continued (Fig 4b).

### Example 5

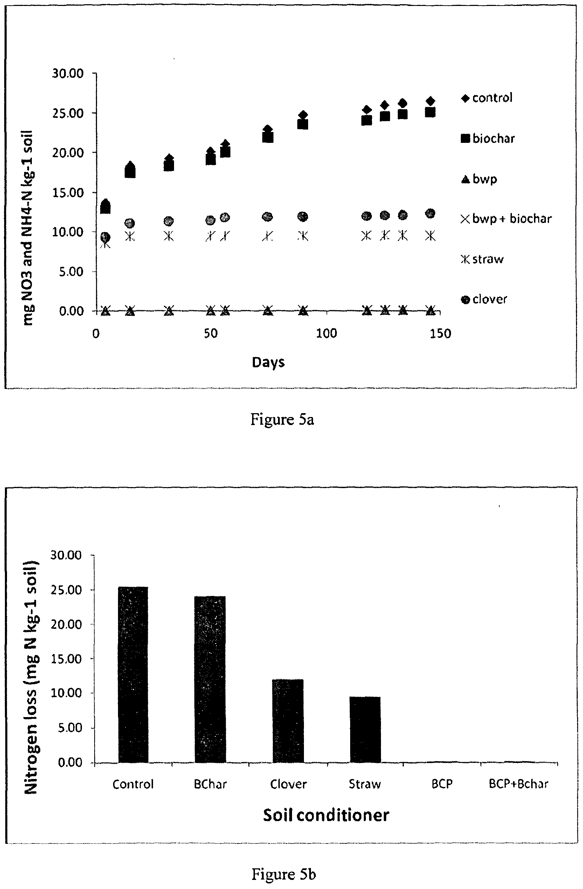

Further work in winter 2009/10 using open-top lysimeters located in open cages measured N leaching losses from approximately November 2009 in soils under natural conditions (Soils from Long Hoos plot - under wheat production). The soils were given a range of treatments. Cumulative N leaching losses are shown in Fig.5a. Biochar caused no decrease in N leaching compared to the control. Addition of both straw and clover decreased N leaching losses by about 40%. However there was a dramatic decrease in N leaching following the addition of BCP, with or without biochar. This occurred immediately after incorporation of BCP so there was not any initial leaching loss before the immobilization process began. As this data was obtained under field conditions this proves conclusively that the total immobilization of N by BCP in arable soils can be achieved. The winter of 2009/2010 was the coldest for many years. However the immobilization mechanism still operated and there was no evidence of a freeze-thaw process operating on the cells of the microbial biomass and releasing biomass N by cell lysis.

The same data, in simplified form, is shown in Fig. 5b. Here the sums of the N leaching losses are given over the period November 2009 to March 2010. Again it is clear that the BCP is totally successful in immobilizing inorganic N which would otherwise be leached to the environment. While both straw and clover immobilized N the efficiency of prevention of leaching was only about 40% compared to 100% immobilisation of N with BCP (Fig.5b).

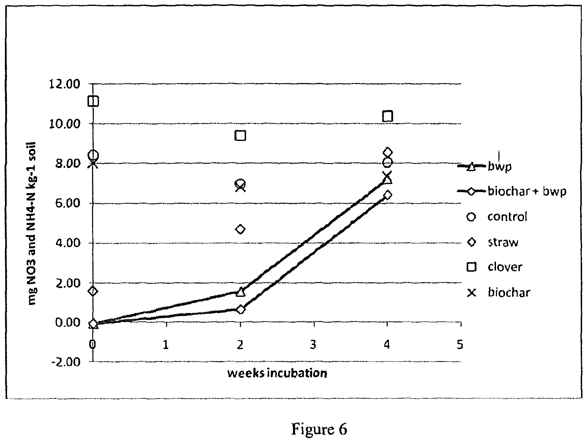

The most striking feature of the use of BCP is shown in Fig. 6. The process of N mineralisation in field lysimeters occurred with all treatments other than BCP. With BCP there was no mineralisation of N until the soils were brought from the field and incubated under optimum conditions. Then, mineralisation occurred slowly up to week 2 and then increased dramatically until week 4. Biochar apparently slowed mineralization with BCP slightly. This result is of great significance. It shows that N mineralisation with BCP only commences when the soil warms. It is precisely at this time that the growing plant begins to have a large need for inorganic N. This N is available due to the mineralisation of N immobilized from BCP, N which would otherwise be lost by leaching in autumn/winter. BCP can therefore be considered both as a means to prevent nitrate leaching and as a slow release fertilizer, releasing N to the young growing crop precisely when it is needed.

### Conclusions

The biodiesel co-product (BCP) was 100% efficient in immobilizing soil nitrate and ammonium N in laboratory experiments and in field lysimeter studies. In the field, this N would otherwise have leached to surface and ground waters causing eutrophication. It also wastes expensive N fertilizer, so decreasing N use efficiency. Furthermore, application of BCP to agricultural land stimulated the production of soil microbial biomass, showing no toxic effects on the soil micro-organisms. Application to land thus provides a safe means of disposal, stopping the need for placement in landfill or incineration, both practices being both costly and with environmental consequences. The N immobilized by BCP is released when the soils of winter warm up in spring, releasing N for the growing crop precisely when it is required.

## Claims

1. Use of a biodiesel co-product in decreasing nitrate leaching from soil, wherein the biodiesel co-product comprises between 40% and 95% glycerol and is the co-product formed when the alcohol reacts with the fatty acids of the triglycerides to form the alkyl ester and the biodiesel co-product.

2. The use of claim 1, wherein the biodiesel co-product is neutralised, optionally with phosphoric acid.

3. The use of claim 1 or 2, wherein the biodiesel co-product comprises between 20% and 70% carbon.

4. The use of any one of claims 1-3, wherein the biodiesel co-product is obtainable by transesterification of triglyceride.

5. A method of decreasing nitrate leaching in a soil comprising applying a biodiesel co-product to a soil, wherein the biodiesel co-product comprises between 40% and 95% glycerol and is the co-product formed when the alcohol reacts with the fatty acids of the triglycerides to form the alkyl ester and the biodiesel co-product.

6. The method of claim 5, wherein the pH of the biodiesel co-product is decreased to between pH6.5 and pH10 before applying the biodiesel co-product to the soil.

7. The method of claim 6, wherein the biodiesel co-product is neutralised before applying the biodiesel co-product to the soil.

8. The method of claim 6 or claim 7, wherein the pH of the biodiesel co-product is decreased with phosphoric acid.

9. The method of any one of claims 6 to 8, wherein the biodiesel co-product comprises between 20% and 70% carbon.

10. The method of any one of claims 6 to 9, wherein the method further comprises increasing carbon content of the soil.

11. A method of disposing of waste from biodiesel production comprising applying a biodiesel co-product to a soil, wherein the biodiesel co-product decreases nitrate leaching from the soil, wherein the biodiesel co-product comprises between 40% and 95% glycerol and is the co-product formed when the alcohol reacts with the fatty acids of the triglycerides to form the alkyl ester and the biodiesel co-product.

12. The method of claim 11, wherein the pH of the biodiesel co-product is reduced to between pH6.5 and pH10 before applying the biodiesel co-product to the soil.

13. A method of improving soil quality comprising applying a biodiesel co-product to a soil, wherein the biodiesel co-product decreases nitrate leaching from the soil, wherein the biodiesel co-product comprises between 40% and 95% glycerol and is the co-product formed when the alcohol reacts with the fatty acids of the triglycerides to form the alkyl ester and the biodiesel co-product.

14. The method of claim 13 comprising increasing carbon and/or nitrogen content of the soil.

15. The use of any of claims 1 to 4, or method of any of claims 5 to 14, wherein excess alcohol is reclaimed from the biodiesel co-product before the biodiesel co-product is applied to soil.

## Patentansprüche

1. Benutzung eines Biodiesel-Kuppelproduktes zum Vermindern der Nitratauswaschung aus Erdboden, wobei das Biodiesel-Kuppelprodukt zwischen 40 % und 95 % Glycerin umfasst und das Kuppelprodukt ist, das gebildet wird, wenn der Alkohol mit den Fettsäuren der Triglyceride unter Bilden des Alkylesters und des Biodiesel-Kuppelproduktes reagiert.

2. Benutzung nach Anspruch 1, wobei das Biodiesel-Kuppelprodukt neutralisiert wird, wahlweise mit Phosphorsäure.

3. Benutzung nach Anspruch 1 oder 2, wobei das Biodiesel-Kuppelprodukt zwischen 20 % und 70 % Kohlenstoff umfasst.

4. Benutzung nach einem von Anspruch 1 bis 3, wobei das Biodiesel-Kuppelprodukt durch Umesterung von Triglyceriden gewinnbar ist.

5. Verfahren zum Vermindern der Nitratauswaschung bei einem Erdboden, umfassend das Aufbringen eines Biodiesel-Kuppelproduktes auf einen Erdboden, wobei das Biodiesel-Kuppelprodukt zwischen 40 % und 95 % Glycerin umfasst und das Kuppelprodukt ist, das gebildet wird, wenn der Alkohol mit den Fettsäuren der Triglyceride unter Bilden des Alkylesters und des Biodiesel-Kuppelproduktes reagiert.

6. Verfahren nach Anspruch 5, wobei der pH-Wert des Biodiesel-Kuppelproduktes auf zwischen pH 6,5 und pH 10 gesenkt wird, bevor das Biodiesel-Kuppelprodukt auf den Erdboden aufgebracht wird.

7. Verfahren nach Anspruch 6, wobei das Biodiesel-Kuppelprodukt neutralisiert wird, bevor das Biodiesel-Kuppelprodukt auf den Erdboden aufgebracht wird.

8. Verfahren nach Anspruch 6 oder 7, wobei der pH-Wert des Biodiesel-Kuppelproduktes mit Phosphorsäure gesenkt wird.

9. Verfahren nach einem von Anspruch 6 bis 8, wobei das Biodiesel-Kuppelprodukt zwischen 20 % und 70 % Kohlenstoff umfasst.

10. Verfahren nach einem von Anspruch 6 bis 9, wobei das Verfahren ferner das Erhöhen des Kohlenstoffgehaltes des Erdbodens umfasst.

11. Verfahren zum Entsorgen von Abfall aus der Biodieselherstellung, umfassend das Aufbringen eines Biodiesel-Kuppelproduktes auf einen Erdboden, wobei das Biodiesel-Kuppelprodukt die Nitratauswaschung aus dem Erdboden vermindert, wobei das Biodiesel-Kuppelprodukt zwischen 40 % und 95 % Glycerin umfasst und das Kuppelprodukt ist, das gebildet wird, wenn der Alkohol mit den Fettsäuren der Triglyceride unter Bilden des Alkylesters und des Biodiesel-Kuppelproduktes reagiert.

12. Verfahren nach Anspruch 11, wobei der pH-Wert des Biodiesel-Kuppelproduktes auf zwischen pH 6,5 und pH 10 gesenkt wird, bevor das Biodiesel-Kuppelprodukt auf den Erdboden aufgebracht wird.

13. Verfahren zum Verbessern der Erdbodenqualität, umfassend das Aufbringen eines Biodiesel-Kuppelproduktes auf einen Erdboden, wobei das Biodiesel-Kuppelprodukt die Nitratauswaschung aus dem Erdboden vermindert, wobei das Biodiesel-Kuppelprodukt zwischen 40 % und 95 % Glycerin umfasst und das Kuppelprodukt ist, das gebildet wird, wenn der Alkohol mit den Fettsäuren der Triglyceride unter Bilden des Alkylesters und des Biodiesel-Kuppelproduktes reagiert.

14. Verfahren nach Anspruch 13, umfassend das Erhöhen des Kohlenstoff- und/oder Stickstoffgehaltes des Erdbodens.

15. Benutzung nach einem von Anspruch 1 bis 4 oder Verfahren nach einem von Anspruch 5 bis 14, wobei überschüssiger Alkohol aus dem Biodiesel-Kuppelprodukt zurückgewonnen wird, bevor das Biodiesel-Kuppelprodukt auf Erdboden aufgebracht wird.

## Revendications

1. Utilisation d'un coproduit de biodiésel dans la réduction de la lixiviation des nitrates du sol, dans laquelle le coproduit de biodiésel comprend entre 40 et 95 % de glycérol et est le coproduit formé lorsque l'alcool réagit avec les acides gras des triglycérides pour former l'ester d'alkyle et le coproduit de biodiésel.

2. Utilisation selon la revendication 1, dans laquelle le coproduit de biodiésel est neutralisé éventuellement avec de l'acide phosphorique.

3. Utilisation selon la revendication 1 ou la revendication 2, dans laquelle le coproduit de biodiésel comprend entre 20 % et 70 % de carbone.

4. Utilisation selon l'une quelconque des revendications 1 à 3, dans laquelle le coproduit de biodiésel peut être obtenu par transestérification de triglycérides.

5. Procédé de réduction de la lixiviation des nitrates du sol, comprenant l'application d'un coproduit de biodiésel au sol, dans lequel le coproduit de biodiésel comprend entre 40 % et 95 % de glycérol et est le coproduit formé lorsque l'alcool réagit avec les acides gras des triglycérides pour forme l'ester d'alkyle et le coproduit de biodiésel.

6. Procédé selon la revendication 5, dans lequel le pH du coproduit de biodiésel est réduit à une valeur entre pH 6,5 et pH 10 avant d'appliquer le coproduit de biodiésel au sol.

7. Procédé selon la revendication 6, dans lequel le coproduit de biodiésel est neutralisé avant d'appliquer le coproduit de biodiésel au sol.

8. Procédé selon la revendication 6 ou la revendication 7, dans lequel le pH du coproduit de biodiésel est réduit avec de l'acide phosphorique.

9. Procédé l'une quelconque des revendications 6 à 8, dans lequel le coproduit de biodiésel comprend entre 20 % et 70 % de carbone.

10. Procédé l'une quelconque des revendications 6 à 9, dans lequel le procédé comprend en outre l'augmentation de la teneur en carbone du sol.

11. Procédé de récupération de déchets d'une production de biodiésel comprenant l'application d'un coproduit de biodiésel au sol, dans lequel le coproduit de biodiésel diminue la lixiviation des nitrates du sol, dans lequel le coproduit de biodiésel comprend entre 40 % et 95 % de glycérol et est le coproduit formé lorsque l'alcool réagit avec les acides gras des triglycérides pour forme l'ester d'alkyle et le coproduit de biodiésel.

12. Procédé selon la revendication 11, dans lequel le pH du coproduit de biodiésel est réduit à une valeur entre pH 6,5 et pH 10 avant d'appliquer le produit de biodiésel au sol.

13. Procédé d'amélioration de la qualité du sol comprenant l'application d'un coproduit de biodiésel au sol, dans lequel le coproduit de biodiésel diminue la lixiviation des nitrates du sol, dans lequel le coproduit de biodiésel comprend entre 40 % et 95 % de glycérol et est le coproduit formé lorsque l'alcool réagit avec les acides gras des triglycérides pour forme l'ester d'alkyle et le coproduit de biodiésel.

14. Procédé selon la revendication 13, comprenant l'augmentation de la teneur en carbone et/ou en azote du sol.

15. Utilisation selon l'une quelconque des revendications 1 à 4, ou procédé selon l'une quelconque des revendications 5 à 14, dans lequel ou laquelle l'excès d'alcool est récupéré du coproduit de biodiésel avant que le coproduit de biodiésel ne soit appliqué au sol.
